Europäisches Patentamt

European Patent Office

Office européen des brevets

(11) Publication number: **0 320 139**
**A2**

## (12) EUROPEAN PATENT APPLICATION

(21) Application number: **88311011.6**

(22) Date of filing: **22.11.88**

(51) Int. Cl.⁴: **G01B 11/06**

(30) Priority: **08.12.87 US 130266**

(43) Date of publication of application:
**14.06.89 Bulletin 89/24**

(84) Designated Contracting States:
**DE FR GB IT**

(71) Applicant: **EMHART INDUSTRIES, INC.**
**426 Colt Highway**
**Farmington Connecticut 06032(US)**

(72) Inventor: **Williams, Reade**
**16 Hilltop Place**
**New London New Hampshire 03257(US)**
Inventor: **Scott, Paul Frederick**
**19 Capitol Avenue**
**Hartford Connecticut 06106(US)**

(74) Representative: **Randall, John Walter et al**
**Emhart Patents Department Lyn House 39**
**The Parade**
**Oadby, Leicester LE2 5BB(GB)**

(54) Optical measurement of wall thickness of transparent articles.

(57) Method and apparatus for accurately measuring the wall thickness of transparent containers at high speeds using a beam of collimated light such as a laser beam. A laser diode (81) and associated optics (83, 85) projects the beam of collimated light along a horizontal incident line intersecting the outer wall (12) of the container at a measurement point. Most of the beam enters the wall and is refracted while a small portion is reflected towards an external linear sensor array along a "reflectant ray" (18). A lens system (60), such as a Fresnel lens, is placed in the path of the reflectant beam (37) between the outer measurement point and the sensor array (70), the long axis of the sensor linear array being defined by the intersection of a horizontal measurement plane and an image plane. The refracted portion of the beam intersects the inner wall at an inner measurement point where a small portion of the beam reflects back toward the outer wall; most of this reflected portion refracts outwardly at the outer wall as a "refractant ray" (37), where it passes through the lens (60) and is detected by the linear sensor array (70). The separations of the reflectant (18) and refractant (37) rays detected by the linear sensor array (70) are substantially proportional to container wall thickness

FIG. 3

Xerox Copy Centre

# OPTICAL MEASUREMENT OF WALL THICKNESS OF TRANSPARENT ARTICLES

## BACKGROUND OF THE INVENTION

The present invention relates to the measurement of wall thickness of transparent articles such as glass and clear plastic containers, and more particularly the use of optical (non-contact) apparatus for this purpose.

In recent years the glassware container industry has strived towards production of lighter weight bottles at higher speeds. This poses an increasing need to monitor container wall thicknesses, to avoid a thin areas which may cause bottles to break or rupture on filling, handling or pressurization. Wall thickness is a significant characteristic for process control as well.

Current commercial thickness gauges typically make use of the high dielectric constant of glass by measuring the capacity between two electrodes near a glass surface. The need for actual or near contact of the probe with the glass wall limits speed of operation and service life.

A number of patents disclose the use of optical gauges for a non-contact approach to glass wall thickness measurements. Prior art patents of this include U.S. Patent Nos. 3,994,599 (laser light projected perpendicularly to axis of glass tube, reflections from inner and outer walls measured); 3,307,446 (non-perpendicularly projected light reflected from inner and outer sidewalls of glass tubing measured using rotating wheel defining windows); 3,807,870; and 3,989,380. U.S. Patent No. 4,120,590 discloses the use of a plural component light beam which is projected against the sidewall of a transparent container, measuring separate reflections from the front and rear sidewalls for all components of the light beam. The reflections are directed onto a detector plane which is conjugate to an image plane at the container to form a pair of co-planar images. Measurement of the average separation of the images is said to give a value proportional to container thickness at a point along the optic axis of the system.

It is a primary object of the invention to provide a non-contact thickness gauge for glassware articles which avoids the shortcomings of capacitive gauges, including undesirable speed limitations and short operational life.

Another object is to provide reasonably accurate measurements for containers having typical inner wall angular deviations from ideal cylindrical surfaces. Desirably, the system should be tolerant of variations in positioning of the system optical components relative to the container.

## SUMMARY OF THE INVENTION

In furthering the above and additional objects, the invention provides apparatus for sensing the wall thickness of rotating transparent containers by means of a remotely located optical sensor. Means are provided for projecting a collimated beam ("incident") of light at an acute angle to a radius of the container. A portion of the beam reflected at the outer sidewall ("reflectant ray") is directed through a lens systems to a linear sensor array, while a refracted portion continues to the inner sidewall at an "inner measurement point". Light reflected at the inner sidewall and directed back toward the outer sidewall intersects the outer sidewall at a "secondary outer measurement point", at which the beam again splits and the greater portion is refracted outwardly as a "refractant ray". This refractant ray is also deflected by the lens system to the linear sensor array. Measurements of the separation of the points of intersection of the reflectant and refractant rays with the linear sensor array are proportional to wall thickness for an ideal (cylindrical) container. Advantageously, the incident ray, reflectant ray and refractant ray are all substantially located in a horizontal reference plane, which also contains the linear sensor array. Means may be provided for rotating the bottle so as to measure the wall thickness in a circumferential scan at a height corresponding to the reference plane.

A principal aspect of the invention is the design and placement of the lens system and other optical elements of the system, in order to reduce errors in wall thickness measurements due to local angular deviations at the inner container wall. Ideally, the lens system should be designed so that the outer measurement point and a virtual image of the inner measurement point are in the object plane of the lens, and the image points at the sensor array are on the image plane of the lens, thereby making the positions of the image points theoretically independent of inner wall deviations. Applicants have shown that best results are obtained in this regard if the incident ray is oriented at about 37.5° from a radius of the container. Best results are obtained with lenses which are more tolerant of a range of orientations and locations of the reflectant and refractant rays, such as Fresnel and holographic lenses. A preferred form for the "incident ray" is a beam of high luminance having a narrow horizontal dimension and an elongated vertical dimension.

## BRIEF DESCRIPTION OF THE DRAWINGS

The above and additional aspects of the inventions are illustrated in the following detailed description of the preferred embodiment, which should be taken in conjunction with the drawings in which:

Figure 1 is a ray trace schematic diagram of a quadrant of a horizontal cross section from an ideal cylindrical transparent container;

Figure 2 is a ray trace schematic diagram corresponding to the view of Figure 1, depicting the formation of a virtual image and a ray cluster over a range of inner wall angular deviations;

Figure 3 is an extended ray trace schematic diagram corresponding to that of Figure 1, showing the illumination source and light detection optics; and

Figure 4 is a somewhat schematic perspective view of wall thickness gauging apparatus embodying the invention together with related container handling apparatus at the inspection site.

## DETAILED DESCRIPTION

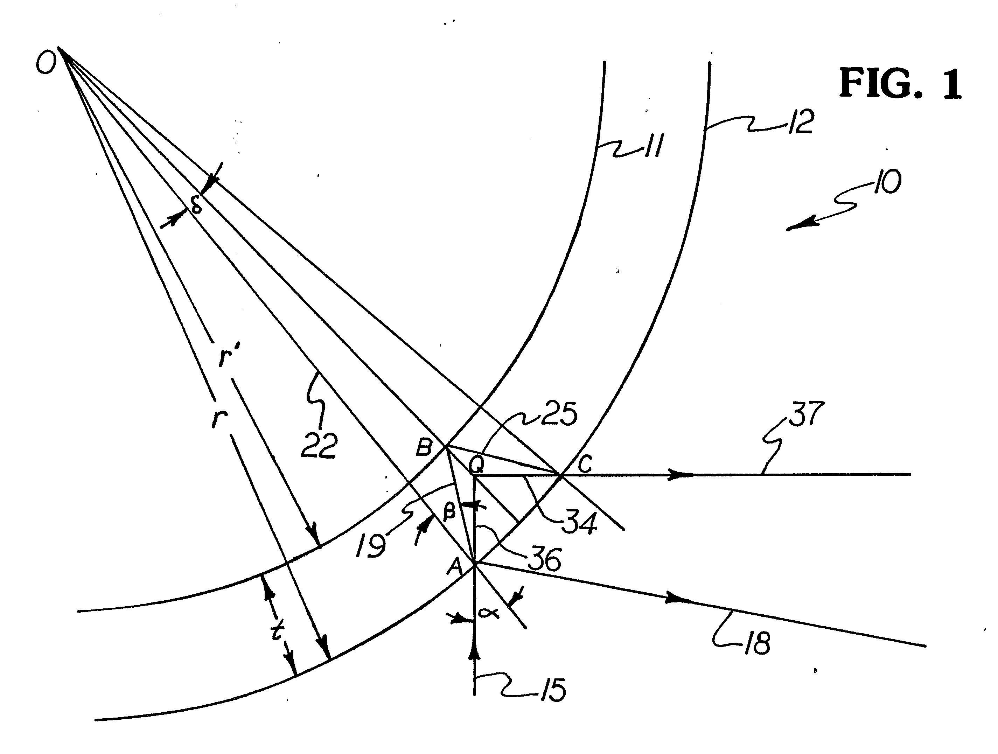

Reference should now be had to the ray trace schematic diagram of Figure 1, for a discussion of geometric principles underlying the wall thickness measurement system of the invention, as applied to an ideal cylindrical transparent container. This system makes use of a collimated beam of light which illuminates a revolving container, is reflected and refracted by the container sidewall, and measured, substantially within a horizontal reference plane. Due to its narrow width in the reference plane, this beam may be modeled as a ray, and the following discussion assumes this.

Referring to Figure 1, incident ray 15 impinges on the outer wall 12 of transparent container 10 at outer measurement point A, where a portion 19 of the ray enters the wall, is refracted, and travels to inner measurement point B on inner wall 11. A lesser portion of incident ray 15 is reflected at A ("reflectant ray 18"). At inner measurement point B a portion 25 of the ray is reflected back toward the outer wall 12. At point C most of ray 25 is refracted as "refractant ray 37". A "measurement axis" 22 intersects the outer measurement point A and the axis of symmetry of container 10 (at O). For the ideal container 10 of Figure 1 the refractant ray 18 and incident ray 15 each form an angle $\alpha$ at opposite sides of measurement axis 22 and both rays are in the plane of the illustrated container cross-section the horizontal "reference plane"), as are rays 19, 25, and 37.

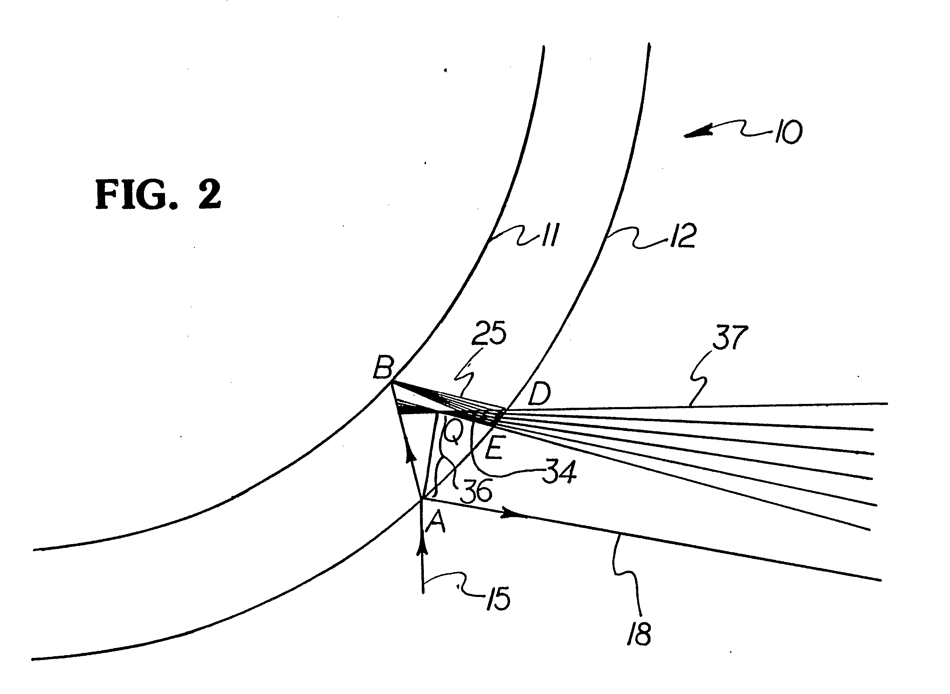

Figure 2 illustrates the formation of a virtual image of the reflection point B of ray 19. The invention makes use of a rule of Gaussian optics that any ray originating from a point in the object plane of an ideal lens will pass through the corresponding point on the image plane, regardless of the direction of the original ray. The outer surface of the ideal bottle may be modeled as a divergent lens surface with an object plane containing the inner wall reflection point (object point). By the above principle, therefore, a corresponding virtual image point Q will exist which is independent of the direction of the ray emanating from the object point B - thus, independent of the inner wall angle. Due to local angular deviations of the inner wall at point B, the direction of reflected ray 25 can vary over a range of angles, as is shown between extreme points D, E. The within-the-wall projections 34 of rays 37 therefore vary in their orientations over a range depending on the direction of ray 25, but these projections 34 can be seen to converge at point Q. Point Q is thus a virtual image of the inner wall reflection point B.

Considering the virtual image distance $S'$ of the lens surface between point C (secondary outer measurement point) and virtual image point Q, the paraxial formula for this distance is:

$$1/s' = (1-N)/r \; N/s$$

Where s - Object distance between point B and secondary outer measurement point C,
N = Index of refraction of container material, and
r = Outer radius of bottle

To take an illustrative example, for N = 1.5, r = 1.25 inches, and s = 0.1 inches, this formula gives $s'$ 0.068 inches. This paraxial formula is only accurate, however, for reflected rays 25 close to segment BC.

In the technique of the invention, wall thickness t is deduced from the separation distance x between the virtual image point Q and the outer measurement point A, and lens system 60 is designed so that these two points are in its object plane. Wall thickness may be derived from this separation distance as follows (where $r'$ represents the inner radius of the bottle; $\alpha$ = incident angle; $\beta$ = angle between refracted ray 19 and measurement axis 22; and $\delta$ = angle between measurement axis 22 and radius OB. By Snell's Law, sin $(\beta)$ = $(1/N)$ sin $(\alpha)$ Applying the law of sines to triangle OBA:

$$\sin(\delta + \beta) = (r/r')\sin(\beta)$$

Applying the law of sines to triangle AOQ:

$$X = \overline{AQ} = (r)\sin(\delta)/\sin(\alpha + \delta)$$

The wall thickness t may be related to separation distance x by differentiating x with respect to r2:

$dx/dr' = (r/r')^2(\sin(\alpha)\sin(\beta))/ (\sin^2(\alpha+\delta)/\sin(\beta+\delta))$

In the limit for small wall thickness t, r r' and δ approaches zero, and the above equation becomes

$dx/dr' = \tan(\beta)/\sin(\alpha)$

Applicants have shown best results (lowest error) for incidence angles α around 37.5°. For this value of angle α, and N = 1.5, the above derivative equals about 0.7314. This number represents the factor of proportionately between separation distance x and wall thickness t.

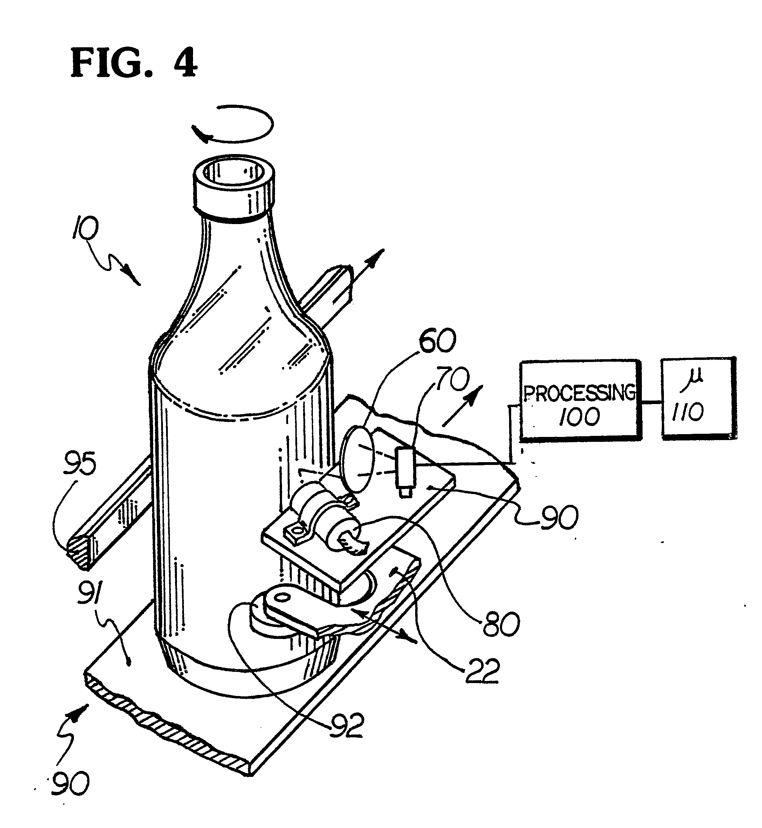

To test the accuracy of the thickness factor at larger wall thicknesses, applicants have performed ray trace computations over a range of wall thicknesses to compare exact wall thickness with an extrapolated linear relationship computed as described above. These computations show that if the linear relationship is assumed, thick sections will be overstated. Hence an appropriate compensation is made by the microprocessor 110 (Figure 4.)

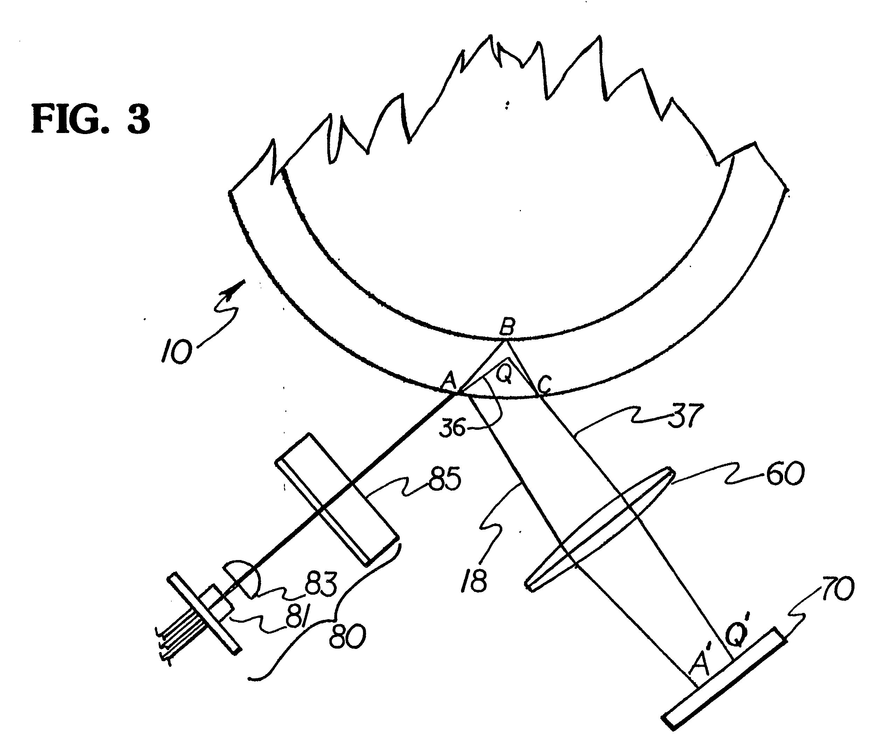

With reference to the schematic view of Figure 3, in order to translate the virtual image 36 between points Q,A to a real image outside container 10, a lens system 50 is provided. Lens 50 is oriented so that both the outer measurement point A and the virtual point Q lie on its object plane, so that the lens' image plane contains the two corresponding image points A', Q' In practice, the position of virtual image point Q may vary due to aberrations and other errors in the cylindrical lens surface of outer container wall 12; accordingly point Q may lie somewhat outside the lens' object plane.

Figures 3 and 4 schematically illustrate a complete wall thickness measurement system embodying the invention. As seen in Figure 4, the system's optical components may be mounted on a movable base 90, which moves in conjunction with rollers 22 toward container 10 to bring the components into a suitable position for inspection. During inspection, the container 10 is rotated between belt 95 and rollers 22 to permit a circumferential scan of wall thickness at a given height. Light source 80 may comprise a laser diode 81 and plano-cylindrical lens 83 and 85, such lenses being perpendicularly oriented. In a given operative embodiment, laser diode 81 consisted of a Mitsubishi ML4102 or ML4402 laser diode, operating in fundamental transverse mode, with a limited astigmatism of around 4 micrometers (ML4102 and ML4402 are trade designations of Mitsubishi Electric Corporation). Advantageously, lens 83 is separated from laser diode 81 by one focal length. Lenses 83 and 85 limit the divergence of incident beam 15 from their central axis in the horizontal and vertical planes, respectively. Thus, this lens system focuses the laser light to form a collimated beam 15 of high luminance and limited cross section, illustratively a bar measuring 10 mm in height and 0.2 mm in width. Incident beam 15 was oriented at an incidence angle α (Figure 1). Effectively, this beam acts as a single ray in the horizontal reference plane, and the elongated vertical dimension of the beam accommodates vertical misalignment.

As best seen in Figure 3, the reflectant and refractant rays 18, 37 are redirected by lens assembly 60 to linear photosensor array 70. Advantageously, lens 60 comprises a Fresnel or holographic lens, which accommodates a broad range of locations and orientations of the rays 18, 37. As illustrated, the lens 60 is placed approximately equidistant from the expected location of virtual image 36 and sensor array 70, and oriented parallel to the expected (nominal) orientation of the image 36. Sensor array 70 may consist of a linear array from EG&G Reticon, Sunnyvale, California. Image processor 100 tracks the measurements by sensor array 70 of the separation of points A', Q', while microprocessor 110 uses this information and the optical parameters of the system to derive the wall thickness of container 10.

## Claims

1. A method for measuring the wall thickness of transparent containers which comprises the steps of: illuminating a sidewall (12) of the container (10) with an incident ray (15) oriented at an acute angle (α) to a radius of said container, thereby producing separate "reflectant" (18) and "refractant" (37) rays, the former representing a reflection of the incident ray from the front surface of the sidewall and the latter a reflection from the rear surface of the sidewall;
using the lens means (60), redirecting the reflectant (18) and refractant (37) rays to a linear detector assembly (70), said linear detector assembly being located at an image plane of the lens means which is conjugate to an object plane nominally containing the front-surface reflection point of the reflectant ray (18) and a virtual image (36) of the rear-surface reflection point of the refractant ray (37); and
measuring (110) the separation of said reflectant and refractant rays at said linear detector assembly as an index of the thickness of the article.

2. A method as defined in claim 1 wherein the acute angle of the incident ray (15) is about 37.5°.

3. A method as defined in claim 1 wherein the illuminating step comprises illuminating the container with a collimated laser beam of narrow width and elongated height.

4. A method as defined in claim 1, further comprising the step of rotating the container while continually carrying out the measuring step.

5. A method as defined in claim 4 wherein the incident, reflectant, and refractant rays are all essentially located in a horizontal reference plane.

6. A method as defined in claim 1 further comprising the step of using the measured separation to calculate of the thickness of the container.

FIG. 1

EP 0 320 139 A2

**FIG. 2**

# FIG. 3

EP 0 320 139 A2

# FIG. 4